# EUROPEAN PATENT APPLICATION

(11) **EP 4 328 776 A1**
(43) Date of publication of application: **28.02.2024**
(21) Application number: 22191910.3
(22) Date of filing: 24.08.2022
(51) Int. Cl.: G06F 21/60, G06F 21/31, G06F 21/64, B33Y 10/00, G06Q 50/18, B33Y 50/02, H04L 9/00, H04L 9/32

(54) **METHOD FOR SECURELY PRINTING ONE OR MORE THREE-DIMENSIONAL OBJECTS VISUALIZED IN A COMPUTER SIMULATED VIRTUAL ENVIRONMENT COMMUNICATIVELY COUPLED TO A BLOCKCHAIN NETWORK**

(71) Applicant: Siemens Aktiengesellschaft, 80333 München (DE)
(72) Inventor: SINGH, Saurabh Narayan, 81739 München (DE); RAJ, Arun, 635110 Hosur, Tamil Nadu (IN)
(74) Representative: Horn Kleimann Waitzhofer Schmid-Dreyer Patent- und Rechtsanwälte PartG mbB

(57) **Abstract**

A system, method and apparatus for securely printing one or more three-dimensional objects visualized in a computer simulated virtual environment communicatively coupled to a blockchain network. The method comprising receiving, by a processing unit, a request from a user to print one or more three-dimensional objects visualized as three-dimensional design models in a computer simulated virtual environment. Each of the three-dimensional design models are linked to a unique identifier stored in the blockchain network. The method comprises verifying an authenticity of the user based on credentials of the user stored in the blockchain network. The method comprises verifying an ownership of the one or more three-dimensional design models based on the corresponding unique identifier. The method comprises printing the one or more three-dimensional objects if the authenticity of the user and the ownership of the one or more three-dimensional design models is verified.

## Description

The present invention generally relates to digital rights management in 3D printing systems, and more specifically to a method and system for securely printing one or more three-dimensional objects visualized in a computer simulated virtual environment communicatively coupled to a blockchain network.

Additive manufacturing4 or 3D printing is the process of creating 3D solid objects of almost any shape from a digital model. 3D printing technology is used in the fields of architecture, engineering, and construction (AEC), industrial design, automotive, aerospace, military, engineering, civil engineering, dental and medical industry, biotechnology, fashion, shoes, jewelry, etc. Conventionally for 3D printing, 2D representation of a design are visualized on a graphical user interface. With the advancement in technology, metaverse promises new business models and design opportunities for various applications by creating potential in virtual and/or augmented reality paradigm. The metaverse is a next generation of fully-immersive three-dimensional collaborative space that integrates multiple technical directions such as models, designs, internet of things, industrial internet, augmented reality, virtual reality, mixed reality, and the like. Metaverse is a virtual universe with shared, 3D virtual spaces where virtual assets can be owned, placed and interacted with.

Currently, 3D designs are being sold on centralized controlled marketplaces, but once the end user has purchased a 3D model, there is no way to control the further distribution of the designs by individual buyers. The sellers must make peace with the fact that the design, once sold, can be reused. There are legal frameworks to control this, but they face the challenge that such infractions must first be identified and then brought under some sort of judicial action. For small infractions, the involved cost does not justify such activities. In case of infraction by large organizations, where it is more easily identifiable, the legal frameworks are still helpful.

In an example, consider that instead of having to visualize a a 2D representation of a 3D design before buying it, one can virtually hold the 3D model in hand and observe it to make sure it fulfills their purpose. Metaverse provides a way to have on display multiple 3D designs, provide an on-the-fly change and update mechanism for such designs and a marketplace for users to buy the 3D designs. A major challenge with such 3D models currently is lack of control on the design once it is sold to the user. The purchasers can sell it to multiple other users once they have the design. This leads to loss of revenue to the original creators as well as a challenge towards trust of such business models.

Additional challenges to commercialization of such designs include lack of trust amongst parties to the process (e.g., designers, overseas manufacturers, customers, etc.), interoperability (e.g., amongst design software, part models, printer capabilities and software, etc.), intellectual property concerns (e.g., preventing unauthorized reproduction or copying of products or designs, difficulty/cost of licensing IP, etc.), post processing and finishing requirements, product assembly, quality assurance, packaging considerations, shipping and delivery considerations, supply chain integrity, environmental concerns, and so forth.

In the light of the above, there exists a need to provide a system and method for securely printing one or more three-dimensional objects visualized in a computer simulated virtual environment communicatively coupled to a blockchain network such that digital rights of the creator are secured.

Therefore, the object of the invention is to provide a system and method for securely printing one or more three-dimensional objects visualized in a computer simulated virtual environment communicatively coupled to a blockchain network.

The object of the present invention is achieved by a computer-implemented method for securely printing one or more three-dimensional objects visualized in a computer simulated virtual environment communicatively coupled to a blockchain network.

Throughout the present disclosure, the term "printing" as used herein refers to additive manufacturing or 3D printing which is the process of creating 3D solid objects of almost any shape from a digital model. As an example, 3D printing technology is used in the fields of architecture, engineering and construction (AEC), industrial design, automotive, aerospace, military, engineering, civil engineering, dental and medical industry, biotechnology, fashion, shoes, jewelry, and so forth. The present invention focusses on securely printing and managing digital rights of a creator, thereby preventing indiscriminate or illegal use of the 3D printing of a design which is an intellectual property of the creator or the owner.

Throughout the present disclosure, the term "digital rights" as used herein refers to rights of any person or entity that enables an individual or entity to access, use, create, reproduce, publish digital media, or access and use a computer, and other electronic device. In particular, the term refers to the protection and realization of existing rights, such as copyrights or other design rights attributed to a three-dimensional design model and the corresponding 3D object or product and includes the rights to a digital model of a three-dimensional product or a variant thereof. The owner of the digital rights may be, for example, the original owner, author, designer or such licensee or transferee of such rights. The term "digital rights" is not intended to be limiting, and references to the digital rights of the owner of the 3D object and is intended to include any entity having rights to create, use or regenerate the 3D object. The owner may authorize others to use the digital rights attributed to the 3D object or the 3D design model of the object.

Throughout the present disclosure, the term "three-dimensional objects" refer to objects in the real-world with measurable dimensions. Examples of 3D objects may include but not limited to machines, machine components, electronic device components, apparels, jewelry, toys, architectural components, and so forth. For the sake of simplicity and clarity, "three-dimensional objects" may also be referred to as "3D objects" hereinafter. Throughout the present disclosure, the term "three-dimensional design models" as used herein refers to electronic representation of 3D objects in the computer simulated virtual environment. For the sake of simplicity and clarity, "three-dimensional design models" may also be referred to as "3D design models" or "3D models" hereinafter.

Throughout the present disclosure, the term "computed simulated environment" as used herein refers to three-dimensional (3D) representation of a real or physical world. It can be understood as a virtual world. The computer-simulated environment is accessible by a user, i.e., it is accessible from the real/physical world. This comprises preferably data exchange between the computer-simulated environment and the real/physical world. In particular, the computer-simulated environment can be understood as the "metaverse". It is also possible to interact with the computer-simulated environment, i.e., to influence or use processes, components and/or functions in the computer-simulated environment. Therefore, processes in the computer-simulated environment may have direct influence on processes in the real/physical world, e.g., by modelling control processes virtually.

For example, it is possible that a user can access the computer-simulated environment via an interface, e.g., a virtual reality (VR) or augmented reality (AR) interface. The counterpart of the computer-simulated environment does not necessarily have to exist but can be for example a 3D model. It is also possible that physical forces and phenomena, e.g., gravity, are represented in a different way in the computer-simulated environment than in the real world, e.g., gravitational acceleration. For the purpose of this invention, the metaverse is comprised of a plurality of 3D design models.

The metaverse may comprise a plurality of computer-simulated components. The computer simulated components can for example be understood as a representation, in particular a 3D representation, of a real or physical component. A component can for example be a room, a building, an item, or an object. The computer-simulated component can have different functionalities/features, e.g., an access interface. The computer-simulated component further comprises data that are component-specific, e.g., attributes/properties of a 3D design model that can be retrieved for example via the access interface. An access to a computer-simulated component can for example comprise usage, modification, connection to other computer-simulated components, etc. The computer-simulated component can interact with the computer-simulated environment. To this end, the computer-simulated component can be connected to the computer-simulated environment.

The metaverse can be realized by a hosting environment. The hosting environment can be for example be implemented as a cloud environment, an edge-cloud environment and/or on specific devices, e.g., mobile devices.

Throughout the present disclosure, the term "blockchain network" refers to a growing list of records called blocks, that are linked together using cryptography. Herein, each block contains a cryptographic hash of the previous block, a timestamp, and transaction data. The timestamp proves that the transaction data existed when the block was published in order to get into its hash. Blocks contain the hash of the previous block, forming a chain, with each additional block reinforcing the ones before it. Therefore, blockchains are resistant to modification of their data because once recorded, the data in any given block cannot be altered retroactively without altering all subsequent blocks.

The method comprises receiving a request from a user to print one or more three-dimensional objects visualized as three-dimensional design models in a computer simulated virtual environment. Herein, the each of the three-dimensional design models are linked to a unique identifier stored in the blockchain network. In particular, the 3D objects are visualized in the metaverse as 3D design models. The 3D design models are linked to a corresponding unique identifier in the form of non-fungible tokens or NFTs. Throughout the present disclosure, the term "non-fungible tokens or NFTs" refers to a unit of data stored on a digital ledger, such as the blockchain, that certifies any digital file to be unique. An NFT functions like a cryptographic token, but unlike cryptocurrencies such as Bitcoin, is not mutually interchangeable, in other words, not fungible. NFTs are created when blockchains string records of cryptographic hash, a set of characters that verifies a set of data to be unique, onto previous records, therefore, creating a chain of identifiable data blocks. This cryptographic transaction process ensures the authentication of each digital file by providing a digital signature that is used to track NFT ownership. NFTs can be used to represent items such as photos, videos, audio, and other types of digital files. While copies of these digital items are available for anyone to obtain, NFTs are tracked on blockchains to provide the owner with proof of ownership that is separate from copyright.

According to an embodiment, the method of receiving a request from the user to print one or more three-dimensional objects comprises visualizing one or more three-dimensional design models in the computer simulated virtual environment by an avatar of the user. The method further comprises selecting a three-dimensional design model in the computer simulated virtual environment by the avatar of a user. The method further comprises requesting printing of the three-dimensional object based on the selection of the one or more three-dimensional design models. Advantageously, the request is raised by the avatar of the user after experiencing the 3D design model of a product/asset/commodity in the metaverse.

The method comprises verifying authenticity of the user based on credentials of the user stored in the blockchain network. In an embodiment, the method of verifying the authenticity of the user further comprises verifying the credentials of the user on a self-sovereign identity network. The self-sovereign identity network provides a one-time verifiable token upon request from the user based on identity of the user. Throughout the present disclosure, the term "self-sovereign identity network or SSI network" as used herein refers to a decentralized identity (DID) system developed by the Worldwide Consortium (W3C). DIDs are a type of identifier that provides a digital identity that is verifiable, decentralized, and "self-sovereign." Self-sovereign identity generally encompasses the concept that different digital creators and owners can store their own identity data on their own devices and provide the identity data to other devices/systems to validate the identity data, without relying on a central repository of identity data. Advantageously, the self-sovereign identity network ensures identifiers used are unique, identity ownership is retained by the requesting entity and identity disputes are able to be resolved without the use of a central authority.

The method comprises verifying an ownership of the one or more three-dimensional design models based on the corresponding unique identifier. The ownership of the one or more 3D design models is verified by accessing information stored in the NFT associated with the one or more 3D design models.

The method comprises printing the one or more three-dimensional objects if the authenticity of the user and ownership of the one or more three-dimensional models is verified. Advantageously, the 3D objects are printed only when the authenticity of the user and ownership of the NFTs is verified, thereby providing access to the users who have rightful ownership on the intellectual property of the 3D design model.

In an embodiment, the method of printing the one or more three-dimensional objects further comprises generating a one-time printing access token when the authenticity of the user and ownership of the one or more three-dimensional models is verified. It will be appreciated that the system only provides one-time (or limited) access for printing a design model such that counterfeiting of 3D design models is eliminated. Furthermore, the one-time printing access also ensures that the 3D design models are not printed without prior permission and approval from the owner/creator of the NFT and the corresponding 3D design model. Moreover, such a system ensures the creator/owner of the 3D design model is fairly compensated as per the market demand of the 3D design model.

The object of the invention is also achieved by an apparatus for securely printing one or more three-dimensional objects in a computer simulated virtual environment communicatively coupled to a blockchain network. The apparatus comprises one or more processing units and a memory communicatively coupled to the one or more processing units. The memory comprises a module stored in the form of machine-readable instructions executable by the one or more processing units. Herein the module is configured to perform the abovementioned method steps.

The object of the invention is also achieved by a system for securely printing one or more three-dimensional objects. The system comprises a computer simulated virtual environment for visualizing one or more three-dimensional design models. The system comprises a blockchain network communicatively coupled to the computer simulated virtual environment. The blockchain network comprises one or more nodes for storing a plurality of three-dimensional design models along with a unique identifier. The system comprises a printing device communicatively coupled to the blockchain network for securely printing one or more three-dimensional objects upon receiving a request from the computer simulated virtual environment. Further the system comprises an apparatus as disclosed above. The apparatus is communicatively coupled to the printing device. The apparatus is configured for securely printing one or more three-dimensional objects based on a request from one or more users in the computer simulated environment.

The object of the invention is also achieved by a computer program product comprising machine readable instructions, that when executed by one or more processing units, cause the one or more processing units to perform the aforementioned method steps.

The object of the present invention is further achieved by a computer readable medium on which program code sections of a computer program are saved, the program code sections being loadable into and/or executable in a system to make the system execute the method steps described above when the program code sections are executed in the system. This summary is provided to introduce a selection of concepts in a simplified form that are further described below in the following description. It is not intended to identify features or essential features of the claimed subject matter. Furthermore, the claimed subject matter is not limited to implementations that solve any or all disadvantages noted in any part of this invention.

The present invention is further described hereinafter with reference to illustrated embodiments shown in the accompanying drawings, in which:
FIG 1 is a block diagram of a system for securely printing one or more three-dimensional objects in a computer simulated virtual environment communicatively coupled to a blockchain network, according to an embodiment of the present invention;
FIG 2 is a block diagram of an apparatus of FIG. 1, according to an embodiment of the present invention; and
FIG 3 is a flowchart depicting steps of a method for securely printing one or more three-dimensional objects in a computer simulated virtual environment communicatively coupled to a blockchain network, according to an embodiment of the present invention.

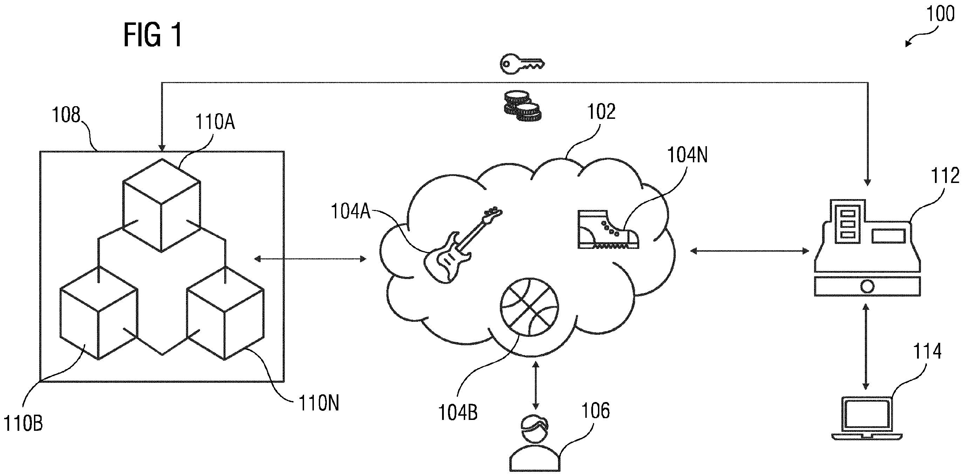

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details. FIG 1 is a block diagram of a system 100 for securely printing one or more three-dimensional objects in a computer simulated virtual environment communicatively coupled to a blockchain network, according to an embodiment of the present invention. The system 100 comprises a computer simulated virtual environment 102 for visualizing a plurality of three-dimensional design models 104A-104N. The three-dimensional design models 104A-104N may be visualized by a user (or an avatar of the user) 106. The system 100 comprises a distributed ledger 108 (for example, a blockchain network 108). The blockchain network 108 may be configured to store and manage one or more three-dimensional design models along with corresponding unique identifiers in the form of non-fungible tokens (NFTs) represented as 110A-110N. The system 100 further comprises a printing device 112 for printing the three-dimensional objects based on a request received from the user 106. The system 100 comprises an apparatus 114 communicatively coupled to the printing device 112. It should be understood that the system described in FIG 1 is only an exemplary implementation of the invention disclosed and is not limiting to the claims disclosed herein.

The one or more three-dimensional (3D) objects may be real-world objects and goods from various fields such as architecture, industrial design, automotive, aerospace, military, engineering, civil engineering, dental industry, medical industry, biotechnology, and fashion industry (shoes, jewelry, apparels etc.). These 3D objects are visualized in the form of 3D design models 104A-104N in the computer simulated environment or the "metaverse" 102. The metaverse 102 may comprise a plurality of computer-simulated components. The computer simulated components can for example be understood as a representation, in particular a 3D representation, of a real or physical component. A component can for example be an item, a product, or an object. The computer-simulated component can have different functionalities/features, e.g., an access interface. The computer-simulated component further comprises data that are component-specific, e.g., attributes/properties of a 3D design model that can be retrieved for example via the avatar 106 of the user.

As shown, the 3D design models such as design of a guitar 104A, design of a ball 104B and design of a shoe 104N are visualized in the metaverse 102. Furthermore, it is possible that a user (via an avatar of the user in the metaverse) can access the metaverse 102 via an interface such as a headset, e.g., a virtual reality (VR) or augmented reality (AR) interface. The avatar 106 of the user can visualize one or more 3D design models 104A-104N in the metaverse 102 and select the same for printing post access from the owner/creator of the design. It should be understood the user 106 is a buyer of the visualized 3D design models 104A-104N and the creator/owner is a seller of the 3D design models 104A-104N.

The one or more 3D design models thus visualized in the metaverse can be linked to a unique identifier stored in the blockchain network 108. In a preferred embodiment, the blockchain network (or any distributed ledger) may store the 3D design models 104A-104N and corresponding unique identifiers in form of a non-fungible token (NFT) 110A-110N. An NFT 110A-110N is a unit of data stored on the blockchain network 108 that certifies any digital file to be unique. An NFT 110A-110N functions like a cryptographic token, but unlike cryptocurrencies such as Bitcoin, is not mutually interchangeable, in other words, not fungible. NFTs are created when blockchains string records of cryptographic hash, a set of characters that verifies a set of data to be unique, onto previous records, therefore, creating a chain of identifiable data blocks. This cryptographic transaction process ensures the authentication of each digital file by providing a digital signature that is used to track NFT ownership. NFTs 110A-110N can be used to represent items such as photos, videos, audio, and other types of digital files. Advantageously, the copies of these digital items are available for anyone to obtain but NFTs are tracked on blockchains to provide the owner with proof of ownership.

It should be understood that the blockchain network 108 is communicatively coupled to the metaverse 102 such that the one or more 3D design models 104A-104N visualized in the metaverse 102 can be linked to an owner of the corresponding NFT 110A-110N. As shown, the 3D design model of the guitar 104A is linked to the NFT 110A in the blockchain network 108, the 3D design model of the ball 104B is linked to the NFT 110B, the 3D design model of the shoe 104N is linked to the NFT 110N.

The apparatus 106 is communicatively coupled to the printing device 112, the metaverse 102 and the blockchain network 108 for securely printing one or more three-dimensional objects. In one embodiment, the apparatus 106 is deployed in a cloud computing environment. As used herein, "cloud computing environment" refers to a processing environment comprising configurable computing physical and logical resources, for example, networks, servers, storage, applications, services, etc., and data distributed over the network (not shown), for example, the internet. The cloud computing environment provides on-demand network access to a shared pool of the configurable computing physical and logical resources. The apparatus 106 may include a module for securely printing one or more three-dimensional objects visualized in a computer simulated virtual environment communicatively coupled to a blockchain network.

Particularly, the system 100 comprises a cloud computing device configured for providing cloud services for securely printing one or more three-dimensional objects visualized in a computer simulated virtual environment communicatively coupled to a blockchain network. The cloud computing device comprises a cloud communication interface, a cloud computing hardware and OS, and a cloud computing platform. The cloud computing hardware and OS may include one or more servers on which an operating system (OS) is installed and includes one or more processing units, one or more storage devices for storing data, and other peripherals required for providing cloud computing functionality. The cloud computing platform is a platform which implements functionalities such as data storage, data analysis, data visualization, data communication on the cloud hardware and OS via APIs and algorithms; and delivers the aforementioned cloud services using cloud-based applications.

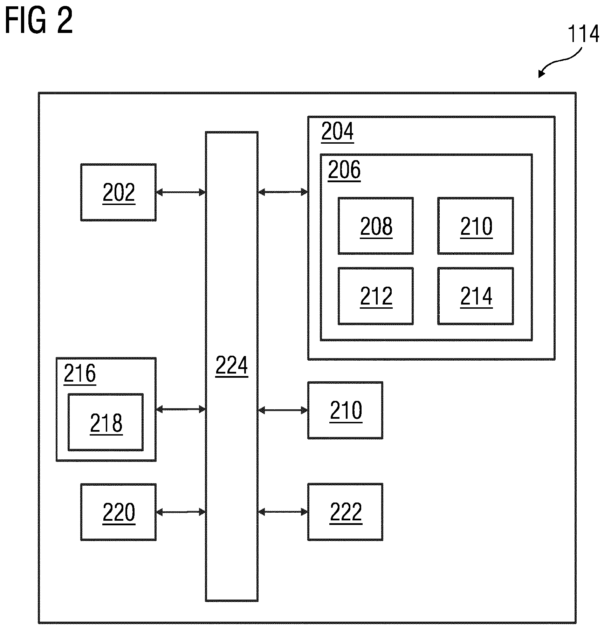

FIG 2 is block diagram of an exemplary apparatus 114 for one or more three-dimensional objects visualized in a computer simulated virtual environment communicatively coupled to a blockchain network, according to an embodiment of the present invention. The apparatus 114 may also be associated with different nodes in the blockchain network 108. In an exemplary embodiment, the apparatus 114 is communicatively coupled to the printing device 112. In another embodiment, the apparatus 114 is communicatively coupled to one or more nodes in the blockchain network 108.

The apparatus 114 may be a personal computer, a laptop computer, a tablet, a server, a virtual machine, and the like. The apparatus 114 includes a processing unit 202, a memory 204 comprising a module 206, a storage unit 216 comprising a database 218, an input unit 220, an output unit 222 and a bus 224.

The processing unit 202 as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 202 may also include embedded controllers, such as generic or programmable logic devices or arrays, application specific integrated circuits, single-chip computers, and the like.

The memory 204 may be non-transitory volatile memory and/or non-volatile memory. The memory 204 may be coupled for communication with the processing unit 202, such as being a computer-readable storage medium. The processing unit 202 may execute instructions and/or code stored in the memory 204. A variety of computer-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory 204 includes the module 206 stored in the form of machine-readable instructions on any of the above-mentioned storage media and may be in communication to and executed by the processing unit 202. When the machine-readable instructions are executed by the processing unit 202, the module 206 causes the processing unit 202 to securely print one or more three-dimensional objects visualized in a computer simulated virtual environment communicatively coupled to a blockchain network.

The module 206 further comprises a request processing module 208, a verification module 210, a printing token generation module 212, and a printing module 214.

The request processing module 208 is configured for receiving a request from a user to print one or more three-dimensional objects visualized as three-dimensional design models in a computer simulated virtual environment. Herein each of the three-dimensional design models are linked to a unique identifier stored in the blockchain network. The request is triggered by the user visualizing the one or more 3D objects in the metaverse. In particular, an avatar of the user in the metaverse may visualize the 3D design models. The avatar of the user may inspect several parameters or characteristics of the 3D objects such as design, size, color, material, functionality, and so forth. Subsequently, the user may select the 3D design model for printing the 3D object. The request processing module 208 is configured for processing the received request to specify information related to the selected 3D design model. The request processing module 208 provides the processed request with the extracted information to the verification module 208.

The verification module 210 is configured for verifying an authenticity of the user based on credentials of the user stored in the blockchain network. The verification module 208 is configured for verifying the credentials of the user using a self-sovereign identity network. The verification module 208 requests the self-sovereign identity network to provide a one-time verifiable token upon request from the user based on identity of the user. In case the user is registered in the SSI network, the verification module 210 successfully verifies the authenticity and identity of the user using the one-time verifiable token. Further, the verification module 208 is configured for verifying an ownership of the one or more three-dimensional models based on the corresponding unique identifier stored in the blockchain network 108. The verification module 210 is configured to verify the ownership of the 3D design model selected by the avatar. The verification module 210 verifies the ownership of the selected 3D design model based on the information stored in the NFTs associated with the 3D design model.

The printing token generation module 212 is configured to generate a one-time printing access token when the authenticity of the user and ownership of the one or more three-dimensional models is verified. In particular, a one-time printing token is generated to allow printing of the 3D design model if the authenticity of the user and the ownership of the user is verified by the verification module 210. The printing module 214 is configured to initiate the printing on the printing device 112 using the one-time printing access token.

The processing unit 202 is configured for performing all the functionality of the module 206. The processing unit 202 is configured for receiving a request from a user to print one or more three-dimensional objects visualized as three-dimensional design models in a computer simulated virtual environment. Each of the three-dimensional design models are linked to a unique identifier stored in the blockchain network. Further, the processing unit 202 is configured for verifying an authenticity of the user based on credentials of the user stored in the blockchain network. Further, the processing unit 202 is configured for verifying the ownership of the one or more three-dimensional model based on the corresponding unique identifier. Further, the processing unit 202 is configured for printing the one or more three-dimensional objects if the authenticity of the user and ownership of the one or more three-dimensional models is verified.

The storage unit 216 comprises the database 218 for storing digital certificates, printing requests, data pertaining to users and so forth. The storage unit 216 and/or database 218 may be provided using various types of storage technologies, such as solid state drives, hard disk drives, flash memory, and may be stored in various formats, such as relational databases, non-relational databases, flat files, spreadsheets, and extended markup files, etc.

The input unit 220 may provide ports to receive input from input devices such as keypad, touch-sensitive display, camera (such as a camera receiving gesture-based inputs), AR/VR headsets etc. capable of receiving requests for 3D printing one of more 3D objects. The display unit 222 may provide ports to output data via output device with a graphical user interface for displaying the one or more 3D design models. The bus 224 acts as interconnect between the processing unit 202, the memory 204, the storage unit 216, the input unit 220, and the display unit 222.

Those of ordinary skilled in the art will appreciate that the hardware depicted in FIG 2 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present disclosure.

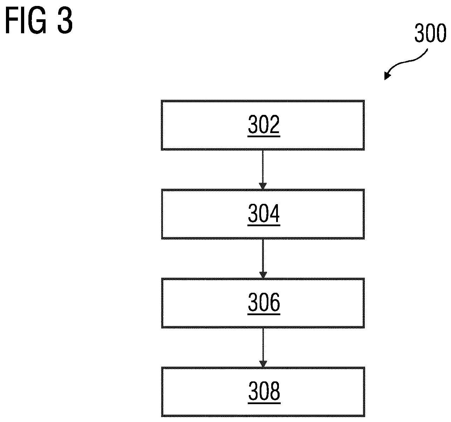

FIG 3 is a flowchart depicting steps of a method 300 for securely printing one or more three-dimensional objects visualized in a computer simulated virtual environment communicatively coupled to a blockchain network, in accordance with an embodiment of the present disclosure.

At step 302, a request from a user is received to print one or more three-dimensional objects visualized as three-dimensional design models in a computer simulated virtual environment. The one or more three-dimensional (3D) objects may be real-world objects, items, products, and so forth. In an example, the 3D objects may include but not limited to machines, machine components, electronic device components, apparels, jewelry, toys, architectural components, and so forth. In an exemplary embodiment, the one or more three-dimensional objects such as the design of guitar 104A, design of ball 104B and design of shoe 104N are visualized in the metaverse 102. In an embodiment, the method of receiving a request from the user to print one or more three-dimensional objects comprises visualizing the one or more three-dimensional design models in the in the computer simulated virtual environment by an avatar of the user. The three-dimensional design models 104A-104N may be visualized by a user (or an avatar of the user) 106 in the metaverse comprising number of 3D design models from various creators and owners. In an example, the creators/owners are the sellers of their respective 3D design models who upload the 3D design in the metaverse along with their ownership details. It is possible that a user (via an avatar of the user in the metaverse) can access the metaverse 102 via an interface such as a headset, e.g., a virtual reality (VR) or augmented reality (AR) interface and visualize the 3D design models in the metaverse. The avatar of the user may select a particular three-dimensional design model in the computer simulated virtual environment i.e. the metaverse. The selection of the 3D design model may be based on experiencing the 3D design model in the metaverse. Further, the user requests printing of the three-dimensional object based on the selection of the one or more three-dimensional design models. It will be appreciated that the user may request printing of the 3D design model as per the design or may also request some modifications in one or more properties/attributes of the 3D design model before printing. Advantageously, customization of the 3D design as per a requirement from the user may also be possible by implementing the disclosed invention.

As mentioned earlier, each of the three-dimensional design models 104A-N are linked to a unique identifier stored in the blockchain network 108. The one or more 3D design models thus visualized in the metaverse can linked be to a unique identifier stored in the blockchain network 108. In a preferred embodiment, the blockchain network (or any distributed ledger) may store the 3D design models 104A-104N and corresponding unique identifiers in form of a non-fungible token (NFT) 110A-110N. Non-fungible tokens represent assets that are uniquely identifiable or distinguishable. Non-fungible tokens may not be partitioned and combined to increase or decrease the "amount" of the non-fungible tokens. Non-fungible tokens may have unique identifiers or serial numbers. NFTs are created when blockchains string records of cryptographic hash, a set of characters that verifies a set of data to be unique, onto previous records, therefore, creating a chain of identifiable data blocks. This cryptographic transaction process ensures the authentication of each digital file by providing a digital signature that is used to track NFT ownership. In an example, an item (such as music, photo, drawing, video, and the like) may be sold by the owner as an NFT. The unique identity and ownership of an NFT are verifiable via the blockchain ledger. NFTs have metadata that is processed through a cryptographic hash function. It is distributed to each electronic wallet of the number of owners. In an example, non-fungible tokens allow tracking of individual assets and tracking at the level of an individual 3D design models.

At step 304, an authenticity of the user 106 is verified based on credentials of the user 106 stored in the blockchain network 108. In an embodiment, verifying the authenticity of the user comprises verifying the credentials of the user on a self-sovereign identity network. It should be understood that the self-sovereign identity (SSI) network is known in the art. Decentralized identity or DID is an identity system developed by the Worldwide Consortium (W3C). DIDs are a type of identifier that provides a digital identity that is verifiable, decentralized, and "self-sovereign." Self-sovereign identity generally encompasses the concept that different creator/owners of the 3D design models can store their own identity data on their own devices and provide the identity data to other devices/systems to validate the identity data, without relying on a central repository of identity data. Thus, the self-sovereign identity network ensures identifiers used are unique, identity ownership is retained by the requesting entity and identity disputes are able to be resolved without the use of a central authority.

In one embodiment, a Self-Sovereign Identity (SSI) network model is provided. In an example, SSI W3C standards-based solution of delf-sovereign identity management is provided. The SSI key concepts are as follows:
DID-decentralized identifier, a globally unique identifier-i.e., URN based-resolvable and verifiable;
DID infrastructure model-i.e., global key-value pair database composed of all DID blockchains, networks, etc.;
The value of the DID is a document;
Verifiable Credential (VC) that extends the DID by a tamper-evident and verifiable set of claims made by an issuer;
Verifiable Presentation (VP) derived from VC(s) to present specific credential(s) attributes shared with a specific verifier. The VP may contain data generated from the original credential (i.e., zero knowledge proofs); and Verifiable Data Registry-mediates the creation and verification of identities, credential schemas, etc.
As a general description, DIDs are Uniform Resource Locators (URLs) that relate a DID subject to a DID document allowing trustable interactions with that subject. DID documents are documents describing how to use that specific DID. Each DID document can express cryptographic material, verification methods, or service endpoints.

In an embodiment, the self-sovereign identity network provides a one-time verifiable token upon request from the user based on identity of the user. When the user 106 selects a particular 3D design model in the metaverse, a verification check of the user is triggered by the apparatus via the blockchain network 108. The credentials pertaining to one or more verified users are stored in the SSI network. Therefore, when the verification request is initiated, a one-time verifiable token is provided by the SSI network if the credentials of the user match with credentials in the SSI network. This one-time verifiable token is then verified by the processing unit 202 to confirm the authenticity of the user requesting the printing of a 3D design model. It will be appreciated that the identity of the user is verified every time a request to print the 3D design model is initiated, thereby enhancing security and mitigating any risk of illegal/unauthorized access to the 3D design models in the metaverse.

At step 306, an ownership of the one or more three-dimensional models is verified based on the corresponding unique identifier. NFTs are created when blockchains string records of cryptographic hash, a set of characters that verifies a set of data to be unique, onto previous records, therefore, creating a chain of identifiable data blocks. This cryptographic transaction process ensures the authentication of each digital file by providing a digital signature that is used to track NFT ownership.

In a preferred embodiment, when the user selects a particular 3D design model in the metaverse 102, a transaction is initiated to purchase the digital rights of the NFT associated with the selected 3D design model. In an example, the user may buy the digital rights of the NFT via exchanging one or more fungible tokens (such as bitcoins). Once the transaction of bitcoins to the creator/owner of the NFT is completed based on the information stored in the NFT, a smart contract is executed that allows the transfer of digital rights of non-fungible token for one-time access to the user. Therefore, when the user buys the 3D design model from the owner, the information of transfer of ownership is also recorded in the associated NFT. The ownership of the 3D design model is thereby verified based on the information stored in the NFT.

At step 308, the one or more three-dimensional objects are printed if the authenticity of the user and ownership of the one or more three-dimensional models is verified. Once the authenticity of the user and the ownership of the selected 3D design model is verified, a request to print the 3D design model into a 3D object is transmitted to the printing device 112. In the context of the invention, the term "printing device" is to be understood in particular as an electronic device which is provided for printing a three-dimensional structure of a 3D design model. Preferably, this should be understood to mean, in particular, a device which is provided for building a 3D object, in particular in layers, from a material defined as per the 3D design model or as per the requirements of the user. The 3D object is built up in particular additively. It should be understood that the printing device is functional when triggered by the request from the apparatus to print the 3D design model selected by the user. In an embodiment, printing the one or more three-dimensional objects comprises generating a one-time printing access token when the authenticity of the user and ownership of the one or more three-dimensional models is verified. In an example, for providing access to print the 3D design model, a one-time printing token is generated. The one-time printing token thus provides a one-time printing access to the user to print the desired 3D design model.

Advantageously, the present invention provides a unique methodology to combine the connectivity of metaverse, and decentralization and concept of blockchain and non-fungible tokens or NFTs to create a global digital rights management system which can ensure the rights of the content creators over the created artefacts like 3D design models. The present invention aims to provide 3D representations of the design models such that the users can visualize and experience the 3D representations in the metaverse without actually having to view a 3D object in real-world. Furthermore, the present invention aims to secure the digital rights of the creators and owners of the 3D design models. Advantageously, the digital rights management achieved by the invention is capable of ensuring control over distribution of designs by individual buyers. The present invention also ensures that the creators/owners of the 3D design models are fairly rewarded and compensated as the techniques disclosed allow printing of 3D design models using a one-time printing token. Moreover, the present invention also ensures that 3D design models are printed only after authenticity verification and ownership clarification of the one or more 3D design models.

Those skilled in the art will recognize that, unless specifically indicated or required by the sequence of operations, certain steps in the processes described above may be omitted, performed concurrently or sequentially, or performed in a different order.

While the present invention has been described in detail with reference to certain embodiments, it should be appreciated that the present disclosure is not limited to those embodiments. The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope of the invention in its aspects.

### List of references

- 100: system
- 102: computer simulated environment
- 104A-104N: one or more three-dimensional design models
- 106: user/avatar
- 108: blockchain network
- 110A-110N: unique identifiers
- 112: printing device
- 114: apparatus
- 202: one or more processing units
- 204: memory unit
- 206: module
- 208: request processing module
- 210: verification module
- 212: printing token generation module
- 214: printing module
- 216: storage unit
- 218: database
- 220: input unit
- 222: output unit
- 224: bus
- 300: method for securely printing one or more three-dimensional objects visualized in a computer simulated virtual environment communicatively coupled to a blockchain network

## Claims

1. A method for securely printing one or more three-dimensional objects visualized in a computer simulated virtual environment communicatively coupled to a blockchain network, the method comprising:
receiving, by a processing unit, a request from a user to print one or more three-dimensional objects visualized as three-dimensional design models in a computer simulated virtual environment, wherein the each of the three-dimensional design models are linked to a unique identifier stored in the blockchain network;
verifying, by the processing unit, an authenticity of the user based on credentials of the user stored in the blockchain network,
verifying, by the processing unit, an ownership of the one or more three-dimensional design models based on the corresponding unique identifier;
printing, by the processing unit, the one or more three-dimensional objects if the authenticity of the user and the ownership of the one or more three-dimensional design models is verified.

2. The method according to claim 1, wherein verifying the authenticity of the user comprises verifying the credentials of the user on a self-sovereign identity network, wherein the self-sovereign identity network provides a one-time verifiable token upon request from the user based on identity of the user.

3. The method according to claim 1, wherein printing the one or more three-dimensional objects comprises generating a one-time printing access token when the authenticity of the user and ownership of the one or more three-dimensional models is verified.

4. The method according to claim 1, wherein receiving a request from the user to print one or more three-dimensional objects comprises:
visualizing one or more three-dimensional design models in the computer simulated virtual environment by an avatar of the user;
selecting a three-dimensional design model in the computer simulated virtual environment by the avatar of a user; and
requesting printing of the three-dimensional object based on the selection of the one or more three-dimensional design models.

5. An apparatus for securely printing one or more three-dimensional objects in a computer simulated virtual environment communicatively coupled to a blockchain network, the apparatus comprising:
one or more processing units; and
a memory communicatively coupled to the one or more processing units, the memory comprising a module stored in the form of machine-readable instructions executable by the one or more processing units, wherein the module is configured to perform the method steps according to claims 1 to 4.

6. A system for securely printing one or more three-dimensional objects, the system comprising:
a computer simulated virtual environment for visualizing one or more three-dimensional design models;
a blockchain network communicatively coupled to the computer simulated virtual environment, wherein the blockchain network comprises one or more nodes for storing a plurality of three-dimensional design models along with a unique identifier; and
a printing device communicatively coupled to the blockchain network for securely printing one or more three-dimensional objects upon receiving a request from the computer simulated virtual environment; and
an apparatus according to claim 4, communicatively coupled to the printing device, wherein the apparatus is configured for securely printing one or more three-dimensional objects based on a request, according to any of the method claims 1 to 4.

7. A computer-program product, having computer-readable instructions stored therein, that when executed by a processor, cause the processor to perform method steps according to any of the claims 1 to 4.

8. A computer readable medium on which program code sections of a computer program are saved, the program code sections being loadable into and/or executable in a system to make the system execute the method steps according to any of the claims 1 to 4 when the program code sections are executed in the system.
